# DEMANDE DE BREVET EUROPEEN

(11) **EP 3 434 889 A1**
(43) Date de publication de la demande: **30.01.2019**
(21) Numéro de dépôt: 18183690.9
(22) Date de dépôt: 16.07.2018
(51) Int. Cl.: F02M 35/108, F02B 33/44, F02M 35/10

(54) **GROUPE MOTOPROPULSEUR POSSÉDANT UN RENDEMENT AMÉLIORÉ**

(30) Priorité: 25.07.2017 FR 1757034
(71) Demandeur: RENAULT s.a.s., 92100 Boulogne-Billancourt (FR)
(72) Inventeur: ENE, Marius Daniel, Sector 4 BUCAREST (RO); GUILLOUZIC, Yannick, 077190 Ilfov (RO); BOGDAN, Lucian, 077045 Chitila (RO)

(57) **Abrégé**

L'invention se rapporte à un groupe motopropulseur (1, 100) comprenant un moteur thermique (3) doté d'au moins une chambre (4) de combustion, et un circuit d'admission (2) en air dudit moteur.

La principale caractéristique d'un groupe motopropulseur selon l'invention, est que chacune des chambres (4) est dotée d'une première soupape (105) d'admission placée dans le circuit d'admission (2) en air et d'une deuxième soupape (106) d'admission placée dans un circuit secondaire (101) d'alimentation en gaz comprimé, la première soupape (105) régulant l'arrivée d'air dans la chambre (4) et la deuxième soupape (106) régulant l'arrivée du gaz comprimé dans ladite chambre (4).

## Description

L'invention se rapporte à un groupe motopropulseur possédant un rendement amélioré.

Généralement, pour les moteur atmosphériques, l'admission d'air dans la chambre de combustion est réalisée par aspiration naturelle de l'air extérieur. L'entrée d'air est gérée par une ou deux soupapes d'admission, qui s'ouvre(nt)/se ferme(nt) en fonction de la phase de fonctionnement du moteur à combustion interne. Il est important de noter que le niveau de remplissage en air de la chambre de combustion est incomplet pour de nombreux points de fonctionnement du moteur à combustion interne. Le niveau de pression dans la canalisation d'admission, pour les moteurs atmosphériques, se situe autour de 0,8 - 0,95 bar.

Pour les moteurs suralimentés, le niveau de remplissage en air de la chambre de combustion est amélioré par rapport au taux de remplissage obtenus avec des moteurs atmosphériques, grâce à une pression plus élevée dans le système d'admission.

Il est connu de l'état de la technique des procédés d'amélioration du taux de remplissage en air des chambres de combustion d'un moteur. Ainsi, le document US7467608 divulgue un procédé d'alimentation des chambres de combustion d'un moteur, au moyen d'une source d'air comprimé.

Un groupe motopropulseur selon l'invention, possède un rendement amélioré grâce à une gestion rigoureuse, précise et bien contrôlée de l'air injecté dans les chambres à combustion.

L'invention a pour objet un groupe motopropulseur comprenant un moteur thermique doté d'au moins une chambre de combustion, et un circuit d'admission en air dudit moteur.

La principale caractéristique d'un groupe motopropulseur selon l'invention est que chacune des chambres est dotée d'une première soupape d'admission placée dans le circuit d'admission en air et d'une deuxième soupape d'admission placée dans un circuit secondaire d'alimentation en gaz comprimé, la première soupape régulant l'arrivée d'air dans la chambre et la deuxième soupape régulant l'arrivée du gaz comprimé dans ladite chambre. De cette manière, lors d'une phase d'admission du cycle moteur, de l'air et du gaz sous pression sont injectés dans la chambre de combustion pour accroitre le remplissage du moteur en mélange d'air et de gaz et ainsi augmenter le rendement dudit moteur. Ledit gaz sous pression est également de l'air prélevé dans l'atmosphère extérieure, et qui est sous pression. Habituellement, pour un moteur atmosphérique, la pression régnant dans le circuit d'admission en air est comprise entre 0.8 et 0.95 bar. Avec l'apport du gaz sous pression en provenance du circuit secondaire la pression juste en amont de la chambre de combustion peut atteindre au moins 4 bars. Avantageusement, le moteur comprend plusieurs chambres de combustion et chacune d'entre elles peut bénéficier d'une arrivée de gaz sous pression en provenance du circuit secondaire. Le terme « secondaire » appliqué au circuit d'alimentation en gaz sous pression, et l'expression « gaz sous pression » ont pour unique but de différentier ledit circuit du circuit classique d'admission en air. De façon avantageuse, le circuit secondaire d'alimentation en gaz sous pression est programmé pour délivrer des gaz sous pression à un instant donné et sur une période prédéterminée. Préférentiellement, cette période prédéterminée correspond sensiblement à la durée d'une phase d'admission du cycle moteur. Le moteur thermique peut indifféremment être un moteur à essence ou un moteur diesel.

Avantageusement, la première soupape et la deuxième soupape sont placées dans une culasse, et une paroi sépare dans ladite culasse dans celle-ci le circuit d'admission en air et le circuit secondaire d'alimentation du gaz comprimé. Cette paroi a pour objet de séparer les deux circuits afin de les rendre indépendants l'un de l'autre et d'éviter ainsi un mélange du gaz comprimé et de l'air en amont de la chambre de combustion. La culasse délimite une chambre présentant deux compartiments séparés, le circuit d'admission en gaz comprimé débouchant dans un compartiment et le circuit d'alimentation en air débouchant dans l'autre compartiment. De cette manière, la première soupape est spécialement dédiée à la régulation du flux d'air apte à pénétrer dans la chambre, et la deuxième soupape est spécialement dédiée à la régulation du flux de gaz comprimé, apte à pénétrer dans la chambre.

De façon préférentielle, la paroi sépare hermétiquement les deux circuits dans la culasse rendant lesdits deux circuits indépendants l'un de l'autre. De cette manière, en séparant bien les deux composantes, le fonctionnement du moteur est précis et rigoureux.

Préférentiellement, le circuit secondaire d'alimentation en gaz comprimé comprend une source de gaz sous pression reliée à la chambre de combustion au moyen d'une tubulure, ledit circuit secondaire comportant un moyen de fermeture placé sur ladite tubulure. Puisque l'injection de gaz sous pression s'effectue à des instants précis et pendant des périodes prédéfinies, il est nécessaire de pouvoir interrompre momentanément le circuit secondaire d'alimentation en gaz comprimé. La source de gaz sous pression peut, par exemple, comporter un compresseur et un réservoir de gaz, ou un réservoir de gaz sous pression. De façon générale, il est impératif que le volume occupé par le circuit secondaire soit suffisamment modéré, pour pouvoir être compatible avec les espaces disponibles restreints laissés vacants dans un véhicule automobile.

Avantageusement, la source de gaz sous pression comprend un réservoir de gaz sous pression.

De façon préférentielle, le volume du réservoir est compris entre 0.5 litre et 2 litres.

De façon avantageuse, un groupe motopropulseur selon l'invention comprend aux moins deux chambres de combustion dotées chacune d'une première soupape d'admission placée dans le circuit d'admission en air et d'une deuxième soupape d'admission placée dans le circuit secondaire d'alimentation en air comprimé, ledit groupe motopropulseur comprenant un seul circuit secondaire d'alimentation en air comprimé apte à alimenter chacune desdites chambres.

Préférentiellement, le moyen de fermeture est une électrovanne.

Selon un autre mode de réalisation préféré d'un groupe motopropulseur selon l'invention, la paroi est amovible entre une position de fermeture pour laquelle elle sépare le circuit d'admission en air et le circuit secondaire d'alimentation en gaz comprimé et une position d'ouverture pour laquelle elle met en communication lesdits deux circuits. De cette manière, il est possible d'injecter dans chaque chambre du moteur, soit de l'air, soit un gaz comprimé, soit un mélange de ces deux fluides. Cette paroi mobile accroit ainsi le nombre de configurations d'injection possibles, dans chaque chambre du moteur.

L'invention a pour autre objet un procédé de fonctionnement d'un groupe motopropulseur selon l'invention.

La principale caractéristique d'un procédé selon l'invention est qu'il comprend les étapes suivantes,
- Une étape d'alimentation conjointe en air et en gaz comprimé de chaque chambre de combustion à l'aide de la première soupape et de la deuxième soupape lorsque le piston est au PMH lors d'une phase d'admission,
- Une étape d'arrêt de l'alimentation lorsque le piston se retrouve au PMB à la fin de la phase d'admission.

Le terme « PMH » signifie « point mort haut » et « PMB » signifie point mort bas ». Autrement dit, l'injection de gaz comprimé dans chaque chambre se fait conjointement à l'injection d'air durant la phase d'alimentation d'un cycle moteur, l'air et le gaz arrivant séparément dans chaque chambre. L'injection de gaz sous pression ne s'effectue pas durant toute la durée d'une phase de roulage du véhicule, mais à des instants précis et pendant des périodes prédéfinies de ladite phase de roulage.

Un groupe motopropulseur selon l'invention présente l'avantage d'être performant en améliorant le taux de remplissage en air de chaque chambre de combustion d'un moteur, au moyen d'un circuit d'alimentation secondaire en air comprimé, qui est de conception simple et peu encombrant. De plus, cette fonctionnalité supplémentaire est réalisée avec rigueur et précision grâce à des soupapes, augmentant de façon significative, les potentialités du groupe motopropulseur en matière de performance.

On donne ci-après une description détaillée d'un mode de réalisation préféré d'un groupe motopropulseur selon l'invention en se référant aux figures suivantes :
- La figure 1 est une vue schématique d'un groupe motopropulseur selon l'état de la technique,
- La figure 2 est une vue schématique d'un groupe motopropulseur selon l'invention,
- La figure 3 est une vue en perspective partielle d'un moteur d'un groupe motopropulseur selon l'invention,
- La figure 4 est une vue en perspective partielle sous un autre angle du groupe motopropulseur de la figure 3,
- La figure 5 est un diagramme du débit d'air dans une chambre de combustion en fonction du temps, montrant les quatre phases d'un cycle moteur.

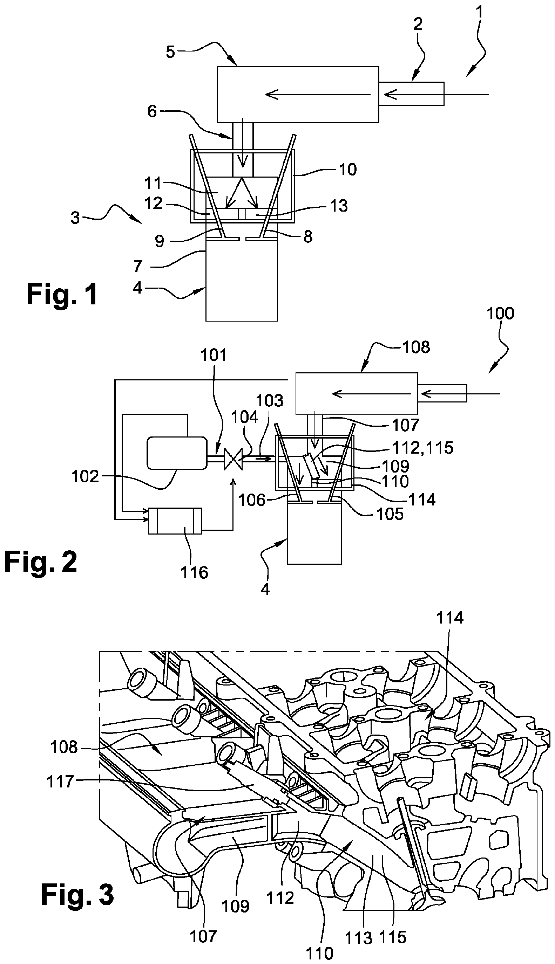

En se référant à la figure 1, un groupe motopropulseur 1 selon l'état de la technique comprend un circuit d'admission 2 en air, un moteur 3 doté de plusieurs chambres 4 de combustion et un circuit d'échappement (non visible sur les figures) des gaz en provenance desdites chambres 4. Le circuit d'admission 2 se termine par un répartiteur 5 d'admission comprenant autant de conduits 6 qu'il y a de chambres 4, ledit répartiteur 5 permettant d'acheminer l'air en provenance de l'extérieur du véhicule dans chacune des chambres de combustion 4. Chaque chambre 4 est délimitée par une paroi 7 généralement cylindrique, dans laquelle coulisse un piston relié à une bielle, elle-même arrimée à un cylindre rotatif. L'arrivée d'air dans chacune desdites chambres est contrôlée par deux soupapes d'admission 8, 9 placées dans une culasse 10 commune à toutes les chambres 4. Chaque conduit 6 du répartiteur 5 débouche dans une préchambre 11 située en amont de la chambre 4 de combustion et placée dans la culasse 10, ladite préchambre 11 définissant deux passages 12, 13 distincts dans lesquels sont positionnées les deux soupapes d'admission 8, 9. Les différentes flèches apparaissant sur la figure 1 matérialisent la direction du flux d'air circulant dans le circuit d'admission 2 en air. De cette manière, l'air en provenance de l'extérieur du véhicule circule d'abord dans le circuit d'admission 2 en air, avant de parvenir au répartiteur 5 où il est subdivisé en plusieurs flux grâce aux conduits 6 dudit répartiteur 5. L'air envahit ensuite chaque préchambre 11 où sont placées les deux soupapes d'admission 8, 9. Lorsqu'il se crée une dépression dans la chambre de combustion 4 par un déplacement du piston vers son PMB lors de la phase d'admission d'un cycle moteur, les deux soupapes d'admission 8, 9 s'ouvrent pour laisser passer l'air dans les chambres de combustion. Ces deux soupapes 8, 9 sont identiques et reçoivent les mêmes sollicitations. Elles fonctionnent donc simultanément. Avec une telle configuration, il peut être estimé que le moteur 3 ne fonctionne pas avec un rendement optimisé, car le taux de remplissage en air de chaque chambre 4, demeure insuffisant.

En se référant à la figure 2, un groupe motopropulseur 100 selon l'invention remédie à ce problème de remplissage d'air, en mettant en oeuvre un circuit secondaire 101 d'alimentation en gaz comprimé, des chambres 4 du moteur 3. De cette manière, chaque chambre 4 va recevoir une composante d'air en provenance du circuit d'admission 2, et une composante de gaz comprimé en provenance du circuit secondaire 101 d'alimentation. Ce circuit secondaire 101 d'alimentation en gaz comprimé comprend une source 102 de gaz comprimé et une tubulure 103 reliant ladite source 102 à chaque chambre 4 de combustion du moteur 3. Cette source 102 de gaz comprimé peut comprendre des éléments tels que par exemple, un réservoir de gaz sous pression obtenu à l'aide d'un compresseur électrique ou mécanique spécialement dédié à cette fonction de mise en pression du gaz dans ledit circuit secondaire 101. Plus précisément, le gaz sous pression est de l'air prélevé dans l'atmosphère extérieure et qui est stocké à l'intérieur du réservoir après compression par le compresseur électrique ou mécanique. On dispose ainsi d'une source inépuisable de gaz, dont la compression peut être renouvelée à volonté, à chaque fois que le réservoir se vide. Un moyen de fermeture, tel que par exemple une électrovanne 104, est placé sur la tubulure 103 du circuit secondaire 101 pour interrompre ou ouvrir le circuit d'alimentation secondaire 101 à des instants précis, liés à des besoins particuliers du moteur 3 en matière d'alimentation en gaz comprimé. Il est à noter que le gaz comprimé peut être de l'air comprimé.

En se référant aux figures 2, 3 et 4, deux soupapes d'admission 105, 106 régulent l'arrivée d'air dans chaque chambre 4 de combustion, une première soupape 105 régulant l'arrivée d'air en provenance du circuit d'admission 2 en air et une deuxième soupape 106 régule l'arrivée de gaz comprimé en provenance du circuit d'alimentation secondaire 101. Chaque conduit 107 du répartiteur 108 d'admission est de forme allongée, et est séparé en deux compartiments 109, 110 au moyen d'une paroi 111 de séparation dont un tronçon 112 s'étend longitudinalement dans le conduit 107. Chaque conduit 107 est prolongé par une préchambre 113 délimitée par une paroi de la culasse 114 possédant une nervure centrale 115, ladite nervure 115 séparant ladite préchambre 113 en deux compartiments. Cette nervure 115 prolonge la paroi 111 de séparation du conduit 107 en étant dans une parfaite continuité avec celle-ci. Autrement dit, l'ensemble constitué par le conduit 107 et la préchambre 113 définit deux passages distincts, qui ne se rejoignent jamais. La tubulure 103 du circuit secondaire 101 vient se raccorder à l'un des deux passages. La première soupape 105 est placée dans la préchambre 113 au niveau du passage prolongeant le circuit d'admission 2 en air, et la deuxième soupape 106 est placée dans la préchambre 113 au niveau du passage dans lequel vient se raccorder la tubulure 103 du circuit secondaire 101.

De cette manière, chaque chambre de combustion 4 du moteur peut bénéficier d'une alimentation classique en air provenant du circuit d'admission 2 et d'une alimentation en gaz comprimé provenant du circuit secondaire 101. Il est important de souligner que la gestion du circuit secondaire 101 et la gestion du circuit d'admission 2 en air sont séparées et donc totalement indépendantes.

En se référant à la figure 3, un capteur 116 permettant de mesurer le débit de gaz sous pression est inséré dans un conduit 107 du répartiteur 108, au niveau du passage dédié au gaz comprimé, afin de contrôler les conditions d'injection du gaz comprimé dans la chambre de combustion 4 du moteur. Il est supposé que le circuit secondaire comprend une source 102 de gaz sous pression, une électrovanne 104, une tubulure principale 103 se prolongeant par des tubulures secondaires (non visibles sur les figures) dont le nombre est égal au nombre de chambres de combustion 4 présentes dans le moteur 3. De cette manière, chaque tubulure secondaire vient se raccorder au niveau de l'un des deux passages de chaque conduit 107 du répartiteur 108. Chaque tubulure secondaire peut représenter, soit un tuyau, soit un passage réalisé dans le répartiteur 5 et/ou la culasse 114.

Une unité 116 centrale de calcul pilote l'électrovanne 104 du circuit secondaire 101, en fonction de la pression régnant dans le circuit d'admission 2 en air au niveau du répartiteur 108, de la pression du gaz comprimé dans ledit circuit secondaire 101, et de la mesure d'autres paramètres au moyen d'autres capteurs.

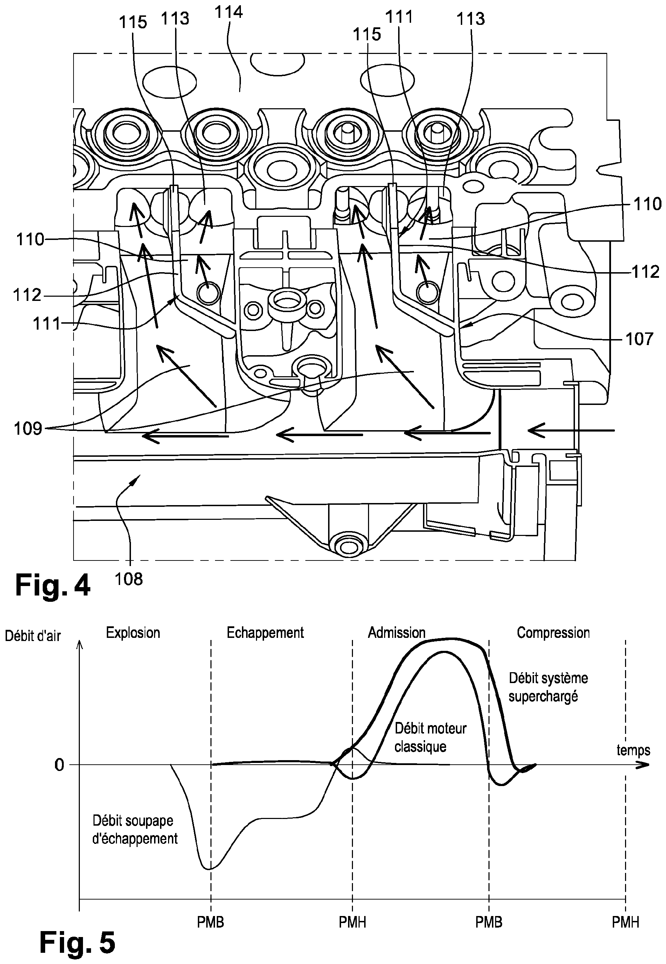

En se référant au diagramme de la figure 5, l'injection de gaz comprimé ne s'effectue que durant la phase d'admission d'un cycle moteur, cette injection s'effectuant conjointement avec l'injection d'air en provenance du circuit d'admission 2 d'air.

Grâce à cet apport en gaz comprimé dans les chambres 4 de combustion, le taux de remplissage en air et/ou en gaz desdites chambres 4 est grandement amélioré et est également bien contrôlé grâce à la présence de deux soupapes d'admission, l'une 104 gérant l'arrivée de gaz comprimé, l'autre celle de l'air en provenance du circuit d'admission 2.

## Revendications

1. Groupe motopropulseur (1, 100) comprenant un moteur thermique (3) doté d'au moins une chambre (4) de combustion, et un circuit d'admission (2) en air dudit moteur, **caractérisé en ce que** chacune des chambres (4) est dotée d'une première soupape (105) d'admission placée dans le circuit d'admission (2) en air et d'une deuxième soupape (106) d'admission placée dans un circuit secondaire (101) d'alimentation en gaz comprimé, et **en ce que** la première soupape (105) régule l'arrivée d'air dans la chambre (4) et la deuxième soupape (106) régule l'arrivée du gaz comprimé dans ladite chambre (4).

2. Groupe motopropulseur selon la revendication 1, **caractérisé en ce que** la première soupape (105) et la deuxième soupape (106) sont placées dans une culasse (114), et **en ce qu'**une paroi (112, 115) sépare dans ladite culasse (114) le circuit d'admission (2) en air et le circuit secondaire (101) d'alimentation du gaz comprimé.

3. Groupe motopropulseur selon la revendication 2, **caractérisé en ce que** la paroi (112, 115) sépare hermétiquement les deux circuits (2, 101) dans la culasse (114) rendant lesdits deux circuits (2, 101), indépendants l'un de l'autre.

4. Groupe motopropulseur selon l'une quelconque des revendications 2 ou 3, **caractérisé en ce que** le circuit secondaire (101) d'alimentation en gaz comprimé comprend une source (102) de gaz sous pression reliée à la chambre de combustion (4) au moyen d'une tubulure (103), et **en ce que** ledit circuit secondaire (101) comporte un moyen de fermeture (104) placé sur ladite tubulure (103).

5. Groupe motopropulseur selon la revendication 4, **caractérisé en ce que** la source (102) de gaz sous pression comprend un réservoir de gaz sous pression.

6. Groupe motopropulseur selon la revendication 5, **caractérisé en ce que** le volume du réservoir (102) est compris entre 0.5 litre et 2litres.

7. Groupe motopropulseur selon l'une des revendications 4 à 6, **caractérisé en ce qu'**il comprend aux moins deux chambres (4) de combustion, dotées chacune d'une première soupape (105) d'admission placée dans le circuit d'admission (2) en air et d'une deuxième soupape (106) d'admission placée dans le circuit secondaire (101) d'alimentation en air comprimé, et **en ce qu'**il comprend un seul circuit secondaire (101) apte à alimenter chacune desdites chambres (4).

8. Groupe motopropulseur selon l'une quelconque des revendications 4 à 7, **caractérisé en ce que** le moyen de fermeture est une électrovanne (104).

9. Groupe motopropulseur selon l'une quelconque des revendications 2 à 8, **caractérisé en ce que** la paroi (112, 115) est amovible entre une position de fermeture pour laquelle elle sépare le circuit d'admission (2) en air et le circuit secondaire (101) d'alimentation en gaz comprimé et une position d'ouverture pour laquelle elle met en communication lesdits deux circuits (2, 101).

10. Procédé de fonctionnement d'un groupe motopropulseur selon l'une quelconque des revendications 1 à 9, **caractérisé en ce qu'**il comprend les étapes suivantes,
- Une étape d'alimentation conjointe en air et en gaz comprimé de chaque chambre (4) de combustion à l'aide de la première soupape (105) et de la deuxième soupape (106) lorsque le piston est au PMH lors d'une phase d'admission,
- Une étape d'arrêt de l'alimentation lorsque le piston se retrouve au PMB à la fin de la phase d'admission.
